# EUROPEAN PATENT SPECIFICATION

(11) **EP 2 434 234 B1**
(45) Date of publication and mention of the grant of the patent: **26.08.2015**
(21) Application number: 11181213.7
(22) Date of filing: 14.09.2011
(51) Int. Cl.: F25B 31/00, F25B 49/02, F25B 13/00

(54) **Air conditioning apparatus**
Klimaanlage
Appareil de climatisation

(30) Priority: 22.09.2010 JP 2010212475
(43) Date of publication of application: 28.03.2012
(73) Proprietor: Aisin Seiki Kabushiki Kaisha, Aichi-ken 448-8650 (JP)
(72) Inventor: Suehiro, Hideyuki, Kariya-shi, Aichi-ken, 448-8650 (JP)
(74) Representative: Winter, Brandl, Fürniss, Hübner, Röss, Kaiser, Polte - Partnerschaft mbB

(56) References cited:
- EP-A2- 1 628 099
- US-A- 5 099 651

## Description

### TECHNICAL FIELD

This disclosure generally relates to an air conditioning apparatus.

### BACKGROUND DISCUSSION

An air conditioning apparatus disclosed in JPH10-030853A includes an indoor heat exchanger, an outdoor heat exchanger and an outdoor fan, which is configured so as to fan a cooling air to the outdoor heat exchanger. The air conditioning apparatus disclosed in JPH10-030853A controls an air volume generated by the outdoor fan so that the air conditioning apparatus is actuated at a maximum coefficient of performance in response to an outdoor temperature. The coefficient of performance (COP) indicates efficiency of a refrigeration cycle. More specifically, the COP indicates a ratio between a cooling performance of the refrigeration cycle and a heat equivalent to a compression load necessary to achieve the cooling performance (i.e. (cooling performance) / (heat equivalent of compression load)). The higher the cooling performance and the smaller the compression load are, the better outcome of the refrigeration cycle is obtained, in other words, the higher the COP becomes.

According to the air conditioning apparatus disclosed in JPH10-030853A, a cooling performance table map, which indicates the air volume having a maximum performance relative to the outdoor temperature, and a COP table map, which corresponds to the air volume indicating the maximum COP relative to the outdoor temperature, are formed and are stored within an area of a storage portion. A control device of the air conditioning apparatus obtains the air volume of the outdoor fan by using the COP table map in order to achieve the maximum COP appropriate to the outdoor temperature in a case that the air conditioning apparatus is normally operated (i.e. in a case that a difference between a room temperature and a set temperature is small). Then, the control device outputs a control signal corresponding to the obtained air volume to a fan control device of the outdoor fan. Accordingly, in the case that the air conditioning apparatus is normally operated, in the case that the air conditioning apparatus is operated in a state where the difference between the room temperature and the set temperature is small, the air volume of the outdoor fan is controlled in order to save energy so as to achieve the maximum COP.

On the other hand, in a case that the cooling performance is not sufficient while a cooling operation is carried out, e.g. in a case that the room temperature is high and the difference between the room temperature and the set temperature is great, the control device obtains the air volume of the outdoor fan on the basis of the cooling performance table map instead of the COP table map in order to achieve a maximum cooling performance relative to the outdoor temperature. Then, the control device outputs the control signal corresponding to the air volume to the fan control device of the outdoor fan. Accordingly, in the case that the cooling performance is not sufficient, the control device appropriately responds to lack of the cooling performance.

According to the air conditioning apparatus disclosed in JPH10-030853A, the air volume of the outdoor fan is selected with reference to the outdoor temperature. Furthermore, the control device for the air conditioning apparatus disclosed in JPH10-030853A switches the air volume of the outdoor fan between a COP priority mode and a cooling performance priority mode on the basis of the room temperature and the set temperature. However, in order to adapt the technology suggested in JPH10-030853A, a COP characteristic and a performance characteristic of each type of air conditioning apparatus need to be assessed with reference to an ambient temperature and a compressor frequency as parameters in order to create a map. Hence, applying the technology of JPH10-030853A to various types of air conditioning apparatuses may require a long development period.

Document US 5 099 651 discloses an air conditioning apparatus according to the preamble of claim 1.

A need thus exists for an air conditioning apparatus, which reduces or does not require labor and long development period of forming a complicated map relating to an air volume of an outdoor fan and which controls the air volume of the outdoor fan so as not to become excessive.

### SUMMARY

According to an aspect of this disclosure, an air conditioning apparatus, includes an engine driven in response to a combustion of a fuel, an engine cooling system through which an engine cooling water for cooling down the engine flows, a radiator releasing a heat of the engine cooling water, a compressor actuated by the engine, an outdoor heat exchanger serving as a condenser for condensing a cooling medium, which is compressed by the compressor, while a cooling operation is carried out, an outdoor fan supplying a cooling air to the radiator and the outdoor heat exchanger in order to cool down the radiator and the outdoor heat exchanger, an expansion portion expanding the cooling medium, which is condensed by the outdoor heat exchanger while the cooling operation is carried out, an indoor heat exchanger serving as an evaporator for evaporating the cooling medium, which is expanded by the expansion portion, while the cooling operation is carried out, and a control device controlling an actuation of the outdoor fan, wherein the control device includes a storage portion storing an information relating to a reference air volume corresponding to each degree of a rotation number of the compressor per unit time while the cooling operation is carried out as a plurality of levels, the control device selects and sets the level of the reference air volume corresponding to the rotation number of the currently actuated compressor per unit time among the plurality of the levels relating to the reference air volume stored within the storage portion while the cooling operation is carried out, and the control device adjusts the selected and set level of the reference air volume so as to increase or decrease the selected and set level of the reference air volume on the basis of a parameter of a difference between a condensing temperature at the condenser in a refrigeration cycle while the cooling operation is carried out and an ambient temperature and a parameter of a temperature of the engine cooling water.

Accordingly, the control device basically actuates the outdoor fan on the basis of the reference air volume, which is defined by a level corresponding to the rotation number of the compressor per unit time among the plurality of levels of the reference air volume stored within the storage portion, while the cooling operation is carried out. The control device calculates the difference between the condensing temperature at the condenser in the refrigeration cycle during the cooling operation and the ambient temperature (i.e. (the condensing temperature) - (the ambient temperature)) and the temperature of the engine cooling water. Then, the control device adjusts the level of the air volume of the outdoor fan so as to be increased or decreased on the basis of the difference between the condensing temperature and the ambient temperature and the temperature of the engine cooling water. Accordingly, a necessary air volume of the outdoor fan may be ensured while avoiding the air volume from becoming unnecessarily excessive and further, the cooling operation may be carried out while increasing a coefficient of performance (COP) of the air conditioning apparatus. According to this disclosure, because the level of the air volume of the outdoor fan is adjusted so as to be increased or decreased, any complex calculation formula and any complex map are not necessarily used (are eliminated).

According to another aspect of this disclosure, a first specified value and a second specified value, which is set to be lower than the first specified value, are specified relative to the temperature of the engine cooling water as threshold values, a third reference value and a fourth reference value, which is set to be lower than the third specified value, are specified relative to the difference between the condensing temperature and the ambient temperature as threshold values, the control device adjusts the selected and set level of the reference air volume so that an air volume of the outdoor fan increases in a case that the temperature of the engine cooling water is greater than the first specified value or in a case that the difference between the condensing temperature and the ambient temperature is greater than the third specified value, and the control device adjusts the selected and set level of the reference air volume so that the air volume of the outdoor fan decreases in a case that the temperature of the engine cooling water is lower than the second specified value and in a case that the difference between the condensing temperature and the ambient temperature is lower than the fourth specified value.

The air conditioning apparatus according to this disclosure does not adapt a system of switching a mode of the air volume of the outdoor fan between a COP priority mode and a cooling performance priority mode on the basis of a room temperature and a set temperature. Therefore, a cooling performance table map, which indicates an air volume by which a maximum performance relative to an outdoor temperature, and a COP table map, which indicates an air volume by which a maximum COP relative to the outdoor temperature is obtained, do not need to be formed, thereby simplifying a control design.

According to the air conditioning apparatus of this disclosure, the outdoor heat exchanger serves as the condenser while the cooling operation is carried out and as the evaporator while the heating operation is carried out. Generally, the outdoor heat exchanger is designed so as to correspond to a rated capacity of the outdoor unit. The air volume of the outdoor fan, which supplies the cooling air to the radiator and the outdoor heat exchanger, per unit time is set as the air volume corresponding to the rated capacity of the outdoor unit. On the other hand, a performance of the compressor, which is actuated by the engine, is set to be variable depending on the engine rotation number. Therefore, in a case that the engine is driven under a condition that the rotation number thereof is lower than a rated rotation number while the cooling operation is carried out, an output of the compressor becomes low. Accordingly, an amount of the cooling medium, which is compressed by the compressor so as to have a high temperature and a high pressure, becomes little, so that a volume of the outdoor heat exchanger and the air volume of the outdoor fan may tend to become relatively excessive, which may become obstructive factors in energy saving.

On the other hand, according to this disclosure, in order to avoid the air volume of the outdoor fan from becoming excessive relative to the amount of the cooling medium, which has the high temperature and the high pressure and which is supplied to the outdoor heat exchanger, the control device selects the level of the air volume of the outdoor fan corresponding to the rotation number of the compressor per unit time. The condensing temperature of the cooling medium tends to fluctuate based on the ambient temperature and the reference air volume of the outdoor fan at the outdoor heat exchanger, which serves as the condenser while the cooling operation is carried out. In otherwords, when the ambient temperature is low, the condensing temperature tends to be low, on the other hand, when the ambient temperature is high, the condensing temperature tends to be high. Furthermore, in a case that the air volume of the outdoor fan, which supplies the cooling air to the outdoor heat exchanger, per unit time is great, the condensing temperature of the cooling medium at the outdoor heat exchanger decreases. On the other hand, in a case that the air volume of the outdoor fan per unit time is little, the condensing temperature of the cooling medium at the outdoor heat exchanger tends to increase. In this case, when a condensing performance of the condenser, which is the outdoor heat exchanger, relative to a cooling medium compressing performance of the compressor becomes relatively excessive, an influence of the air volume of the outdoor fan becomes light. In this case, even in a case that the reference air volume of the outdoor fan per unit time is increased, the COP of the air conditioning apparatus decreases.

In a case that the ambient temperature increases, the temperature of the engine cooling water also tends to increase. Furthermore, in a case that the reference air volume of the outdoor fan per unit time decreases, the temperature of the engine cooling water tends to increase. Therefore, in the case that the air volume of the outdoor fan per unit time decreases because of an influence of the rotation number of the compressor per unit time, the condensing temperature of the cooling medium at the outdoor heat exchanger and the like occurring when the ambient temperature is high, the temperature of the engine cooling water tends to excessively increase. In this case, generally, an avoidance operation control for forcibly decreasing the engine rotation number in order to decrease the temperature of the engine cooling water and the like is executed. As a result, a necessary air conditioning performance of the air conditioning apparatus may not be ensured.

However, according to the air conditioning apparatus of this disclosure, the control device selects and sets the level of the reference air volume corresponding to the rotation number of the currently actuated compressor per unit time among the plurality of levels relating to the reference air volume stored within the storage portion. Furthermore, the control portion adjusts the currently set level of the reference air volume so as to be increased or decreased on the basis of the parameter of the difference between the condensing temperature of the cooling medium at the outdoor heat exchanger and the ambient temperature and on the basis of the parameter of the temperature of the engine cooling water in order to control the air volume so as not to become unnecessarily excessive while ensuring the necessary air volume of the outdoor fan and so as to carry out the cooling operation while increasing the COP of the air conditioning apparatus. In order to achieve the COP, the control device may adjust the level of the reference air volume so as to increase the level of the reference air volume by one level or two levels. Furthermore, the control device may adjust the level of the reference air volume so as to decrease the level of the reference air volume by one level or two levels.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a piping diagram of an air conditioning apparatus according to a first embodiment;

Fig. 2 is a block diagram illustrating a control device;

Fig. 3 is a table illustrating a relationship between levels and rotations of an outdoor fan;

Fig. 4 is a table illustrating a relationship between rotations of a compressor and air volume levels;

Fig. 5 is a graph illustrating a relationship between the rotations (rpm) of the compressor and a third specified value b;

Fig. 6 is a flowchart executed by a CPU of the control device according to the first embodiment; and

Fig. 7 is a flowchart executed by the CPU of the control device according to a second embodiment.

### DETAILED DESCRIPTION

[Brief overview]

While a cooling operation is carried out, a control device of an air conditioning apparatus obtains a difference ΔT between a condensing temperature of a cooling medium at a condenser in a refrigeration cycle while the cooling operation is performed and an ambient temperature and a temperature Te of an engine cooling water. In this case, the condensing temperature may be obtained in a manner that a pressure of a high-temperature high-pressure cooling medium, which is supplied to the condenser (i.e. an outdoor heat exchanger), is detected by a pressure sensor detecting the pressure of the high-temperature high-pressure cooling medium supplied to the condenser, and the detected pressure is converted into a saturated vapor of the cooling medium. The pressure sensor is provided at, for example, a position on a flow passage located upstream side of a flow of the high-temperature high-pressure cooling medium, which is generated by being compressed by a compressor, towards the condenser (i.e. the outdoor heat exchanger) relative to an inlet port of the condenser and downstream side relative to a discharge port of the condenser. Generally, the ambient temperature has influences on the condensing temperature of the cooling medium. The ambient temperature may be obtained by a temperature sensor, which is provided outside so as to be exposed to an ambient air. The temperature Te of the engine cooling water may be obtained by an engine cooling water temperature sensor, which is provided at an outlet port or an inlet port of a cooling chamber, through which the engine cooling water for cooling down an engine flows.

A first specified value A (degrees Celsius: °C) and a second specified value B (degrees Celsius: °C) are specified for the temperature Te of the engine cooling water as threshold values. A relationship that the first specified value A being greater than the second specified value B (i.e. the first specified value A > the second specified value B) is established. The first specified value A relating to the temperature Te of the engine cooling water is set as an upper limit temperature for affecting a reliability of the air conditioning apparatus when the cooling operation is continuously carried out. Therefore, in a case that the temperature Te of the engine cooling water reaches a high temperature exceeding the first specified value A, the reliability of the air conditioning apparatus may not be ensured. Furthermore, the second specified value B relating to the temperature Te of the engine cooling water is set so that the temperature Te of the engine cooling water does not reach the high temperature exceeding the first specified value A even in a case where an air volume level of the outdoor fan is lowered (decreased) by one level and an air volume of cooling air generated by the outdoor fan per unit time is lowered (decreased) by one level. Each of the first specified value A and the second specified value B is experimentally obtainable in response to a type of the air conditioning apparatus. In this case, the first specified value A is set so as to be greater than the specified value B (i.e. the first specified value A > the second specified value B). For example, the first specified value A is set within a range from 95 degrees Celsius and 105 degrees Celsius (including 95 degrees Celsius and 105 degrees Celsius). On the other hand, the second specified value B is set within a range from 75 degrees Celsius and 85 degrees Celsius (including 75 degrees Celsius and 85 degrees Celsius). However, as long as the relationship that the first specified value A being greater than the second specified value B is ensured, the temperature of each of the first specified value A and the second specified value B is not limited to the above example.

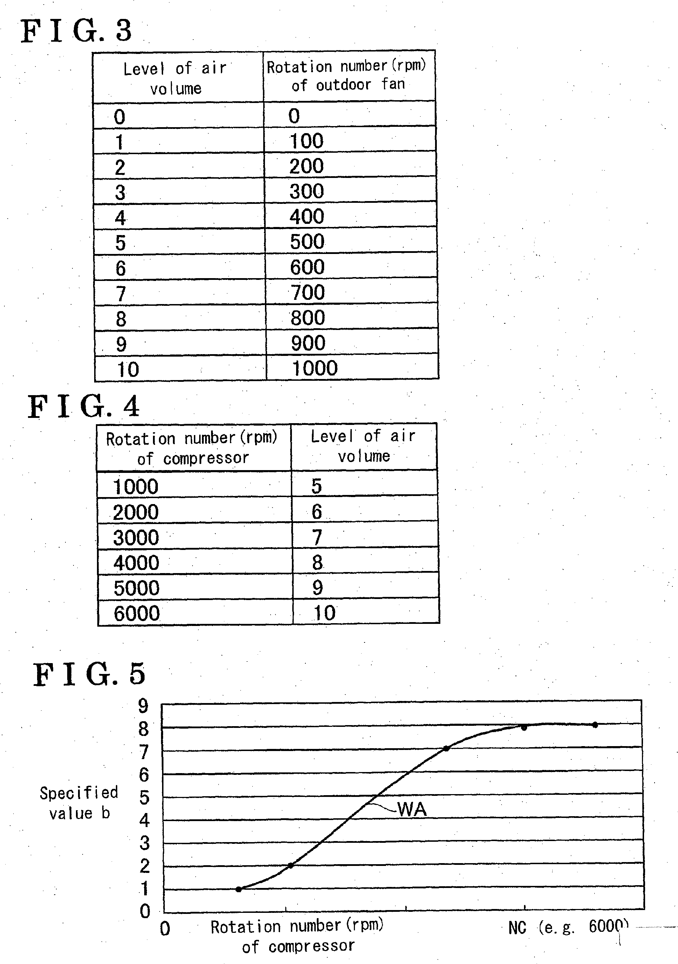

Furthermore, a third specified value a (degrees Celsius: C) and a fourth specified value b (degrees Celsius: °C), where the third specified value a is greater than the fourth specified value b (i.e. a > b), are specified for the difference ΔT between the condensing temperature of the cooling medium and the ambient temperature. The fourth specified value b relating to the difference ΔT between the condensing temperature of the cooling medium and the ambient temperature (i.e. (condensing temperature of cooling medium) - (ambient temperature)) is set as a temperature by which a cooling performance of an indoor unit does not actually increase even in a case where the level of the outdoor fan is increased in order to increase the air volume generated by the outdoor fan per unit time. The fourth specified value b may be obtained by experimental test depending on types of air conditioning apparatuses. However, as indicated by a characteristic line WA in Fig. 5, the fourth specified value b tends to fluctuate depending on rotation number (rpm) of the compressor per unit time. A function expression may be derived from a characteristic line in Fig. 5 with the fourth specified value b as a function of the rotation number of the compressor per unit time. In other words, in a case that the rotation number (rpm) of the compressor per unit time is obtained, the fourth specified value b is calculable from a relational expression in response to the rotation number of the compressor. The fourth specified value b tends to increase as the rotation number (rpm) of the compressor per unit time increases. On the other hand, the fourth specified value b tends to decrease as the rotation number (rpm) of the compressor per unit time decreases. The third specified value a relating to the difference ΔT between the condensing temperature and the ambient temperature (i.e. (the condensing temperature) - (the ambient temperature)) is set as a temperature by which the cooling performance of the indoor unit increases when the level of the air volume generated by the outdoor fan is increased by one level. Generally, the third specified value a (a > b) is set as a value, which is obtained by reducing a given value (β) from the fourth specified value b. For example, the third specified value a may be set as a temperature in a range between 5 degrees Celsius and 10 degrees Celsius (including 5 degrees Celsius and 10 degrees Celsius). On the other hand, the fourth specified value b may be set as a temperature in a range between 0 degrees Celsius and 5 degrees Celsius (including 0 degrees Celsius and 5 degrees Celsius). However, the third and fourth specified values a and b are not limited to the above temperature range.

According to the control device for the air conditioning apparatus having the specified values A, B, a and b as threshold values, the control device adjusts the level relating to a reference air volume of the outdoor fan to an upper level so as to increase the air volume in a case that the temperature Te of the engine cooling water is higher than the first specific value A and/or in a case that the difference ΔT between the condensing temperature and the ambient temperature (i.e. (the condensing temperature) - (the ambient temperature)) is higher than the third specified value a. On the other hand, in a case that the temperature Te of the engine cooling water is lower than the second specified value B and/or in a case that the difference ΔT between the condensing temperature and the ambient temperature (i.e. (the condensing temperature) - (the ambient temperature)) is lower than the fourth specified value b, the control device adjusts the level of the reference air volume of the outdoor fan to a lower level so as to decrease the air volume.

[First embodiment]

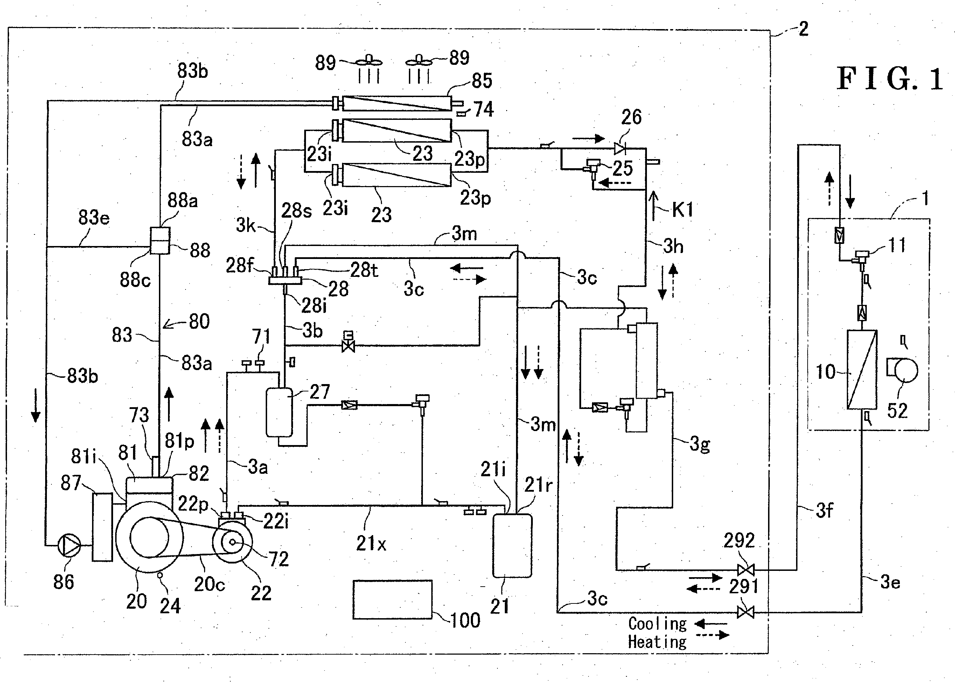

A first embodiment of an air conditioning apparatus will be described below with reference to the attached drawings. As illustrated in Fig. 1, the air conditioning apparatus includes an indoor unit 1 and an outdoor unit 2. The indoor unit 1 is provided at an inside of a room (i.e. indoors). The indoor unit 1 includes an indoor heat exchanger 10 for exchanging heat between a cooling medium and air remaining within the room in order to condition the air and an expansion valve 11 for expanding the cooling medium as basic elements. Additionally, any desired number of (one or more of) the indoor unit 1 may be provided for the air conditioning apparatus. A dashed arrow in Fig. 1 indicates a flow of the cooling medium while a heating operation is carried out. A solid arrow in Fig.1 1 indicates a flow of the cooling medium while a cooling operation is carried out.

The outdoor unit 2 is provided at an outside of the room (i.e. outdoors). The outdoor unit 2 includes an engine 20 (i.e. a driving source), an accumulator 21, a compressor 22 and an outdoor heat exchanger 23 as basic elements. In this embodiment, two outdoor heat exchangers 23 are provided at the air conditioning apparatus. The engine 20 is configured by a gas engine, which is driven by gas combustion. The accumulator 21 is configured so as to accommodate therein the cooling medium in a state where the cooling medium is separated between a cooling medium in a form of gas (which will be hereinafter referred to as a gaseous cooling medium) and a cooling medium in a form of liquid (which will be hereinafter referred to as a liquid cooling medium). The compressor 22 sucks the gaseous cooling medium accommodated within the accumulator 21 while the compressor 22 is driven by the engine 20 and compresses the gaseous cooling medium. Each of the outdoor heat exchangers 23 executes a heat exchange relative to the cooling medium in order to condition the air. An engine rotation number of the engine 20 is detected by an engine rotation sensor 24 (i.e. an engine rotation detecting device). The compressor 22 is operated in conjunction with the engine 20 within the outdoor unit 2 via a power transmitting member 20c such as a belt and the like. Therefore, the engine 20 also serves as a driving source of the compressor 22. The compressor 22 includes an intake port 22i, through which the gaseous cooling medium is sucked in to a compression chamber thereof from the accumulator 21 via a flow passage 21x, and an outlet port 22p, through which the gaseous cooling medium that is compressed at the compression chamber so that the gaseous cooling medium has a high temperature and a high pressure is discharged.

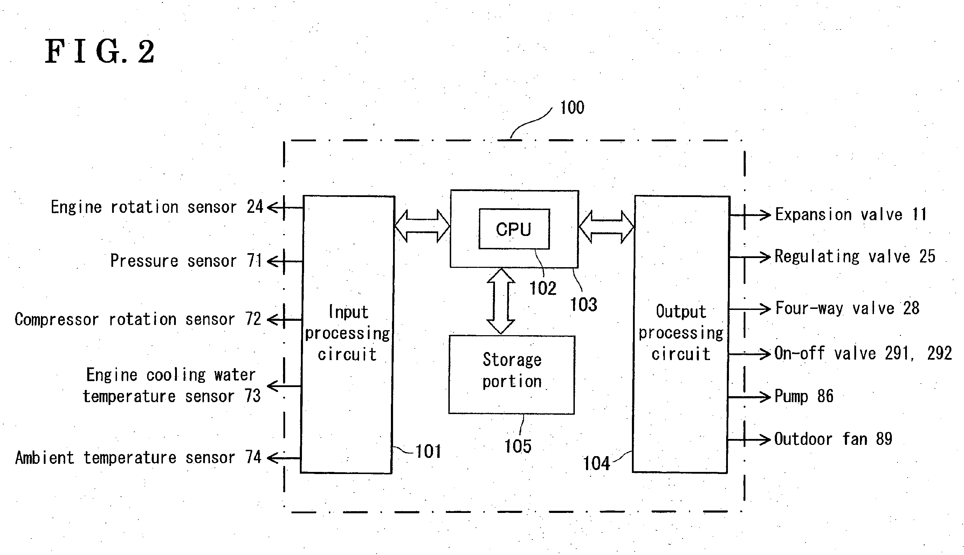

A regulating valve 25, which also serves as an expansion valve, and a check valve 26, which is arranged in parallel with the regulating valve 25, are provided at an upstream side of a flow of the cooling medium relative to the outdoor heat exchangers 23 (i.e. at the upstream side of the outdoor heat exchangers 23 in a returning direction (i.e. a direction indicated by an arrow K1) of the cooling medium returning from the indoor unit 1 to the outdoor unit 2 while the heating operation is carried out). The check valve 26 is configured so as to allow the cooling medium to flow from the outdoor heat exchangers 23 of the outdoor unit 2 to the indoor unit 1, but interrupts the flow of the cooling medium from the indoor unit 1 to the outdoor heat exchangers 23 of the outdoor unit 2. The regulating valve 25 is configured so that an opening degree thereof is adjustable by an electric control executed thereto. The regulating valve 25 includes a driving portion such as a motor, a solenoid or the like, and a valve portion, whose opening degree is variable in response to an operation of the **driving** portion, so that a flow (i.e. a volume of flow) of the cooling medium is adjustable. A control device 100 of the air conditioning apparatus is configured so as to control the opening degree of the regulating valve 25 in order to control the driving portion of the regulating valve 25. A pressure sensor 71 is provided between the outlet port 22p of the compressor 22 and an inlet port 28i of a four-way valve 28. The pressure sensor 71 is configured so as to detect a pressure of the high-pressure cooling medium, which is supplied to each of the outdoor heat exchangers 23 serving as a condenser in a refrigeration cycle while the cooling operation is carried out. An ambient temperature sensor 74, which detects an ambient temperature, is arranged so as to be exposed to an ambient air. A compressor rotation sensor 72 for detecting a rotation number (i.e. a rotation) (rpm) of the compressor 22 per unit time is provided at the compressor 22. An engine cooling water temperature sensor 73 for detecting a temperature of an engine cooling water is provided at an outlet port 81 p of a cooling chamber 81 of the engine 20. Furthermore, the control device 100 is provided at the outdoor unit 2. As illustrated in Fig. 2, the control device 100 includes an input processing circuit 101, into which a signal from each sensor is inputted, a control circuit 103 having a central processing unit 102 (i.e. CUP 102), an output processing circuit 104, from which a control signal is outputted to the actuator and the like, and a storage portion 105 configured with a memory and the like having a storage area.

<Cooling operation of the indoor unit 1 >

The cooling operation (i.e. an operation of cooling down the inside of the room) by the indoor unit 1 will be described below. In a case that the engine 20 is driven by a fuel gas, the compressor 22 is actuated, so that the gaseous cooling medium stored within the accumulator 21 is sucked into the compressor 22 from the inlet port 22i thereof via the intake port 21 i of the accumulator 21 and the flow passage 21x and the gaseous cooling medium is compressed at the compressor chamber of the compressor 22. The gaseous cooling medium, which is compressed so as to have the high temperature and the high pressure, is discharged from the outlet port 22p of the compressor 22 and flows to an oil separator 27 through a flow passage 3a. An oil is separated from the cooling medium at the oil separator 27. Then, the high-temperature and high-pressure cooling medium, which is separated from the oil, flows into each of the outdoor heat exchangers 23 from a port 23i thereof via a flow passage 3b, the inlet port 28i of the four-way valve, which serves as a flow switching valve, a first port 28f and a flow passage 3K. The heat of the cooling medium having the high temperature and the high pressure is exchanged with the ambient air at each of the outdoor heat exchangers 23 (i.e. a cooling air of outdoor fans 89) so as to cool down the cooling medium. Accordingly, the cooling medium is condensed and devolatilized. Hence, each of the outdoor heat exchangers 23 serves as a condenser for condensing and devolatilizing the cooling medium having the high temperature and the high pressure in the refrigeration cycle during the cooling operation. The cooling medium, whose devolatilization progresses (i.e. the cooling medium in a liquid phase state or a gas-liquid two-phase state), flows into the expansion valve 11 (i.e. an expansion portion) via a port 23p of each of the outdoor heat exchangers 23, the check valve 26, a flow passage 3h, a flow passage 3g, an on-off valve 292 and a flow passage 3f. The cooling medium is expanded and is cooled down to have a low temperature at the expansion valve 11. Generally, while the cooling operation is carried out, the regulating valve 25 is in a fully-closed state. However, the regulating valve 25 may be configured so as to be opened during the cooling operation.

The cooling medium, which is condensed at the outdoor heat exchangers 23 and whose devolatilization progresses in the above-described manner, flows into the expansion valve 11 through the flow passages 3g and 3f, so that the cooling medium is expanded at the expansion valve 11 so as to have the low temperature and a low pressure. Then, the cooling medium having the low temperature and the low pressure flows into the indoor heat exchanger 10. The indoor heat exchanger 10 serves as an evaporator for evaporating the cooling medium in the refrigeration cycle while the cooling operation is carried out. The indoor heat exchanger 10 exchanges the heat of the cooling medium with the air within the room in order to cool down the inside of the room. The cooling medium, which is evaporated, is returned to a return port 21 r of the accumulator 21 via a flow passage 3e, an on-off valve 291, a flow passage 3c, a third port 28t of the four-way valve 28, a second port 28s of the four-way valve 28 and a flow passage 3m. The cooling medium returned to the accumulator 21 is accommodated within the accumulator 21 in a state where the liquid cooling medium and the gaseous cooling medium are separated from each other. While the cooling operation is carried out, the opening degree of the regulating valve 25 of the outdoor unit 2 is controlled when necessary in order to control the flow (i.e. the volume of the flow) of the cooling medium at the outdoor unit 2. Accordingly, the cooling operation is executed in the above-described manner.

<Heating operation>

The heating operation for heating the inside of the room will be described below. In the case that the engine 20 is driven by the fuel gas, the compressor 22 is actuated, so that the gaseous cooling medium stored within the accumulator 21 is sucked into the compressor 22 from the intake port 22i thereof via an inlet port 21 i of the accumulator 21 and the flow passage 21x. The gaseous cooling medium sucked into the compressor 22 is compressed at the compression chamber of the compressor 22. The gaseous cooling medium, which is compressed so as to have the high temperature and the high pressure, is discharged from the outlet port 22p of the compressor 22 and flows to the oil separator 27 via the flow passage 3a. The oil of the cooling medium is separated at the oil separator 27. Then, the gaseous cooling medium, whose oil is separated and which has the high temperature and the high pressure, flows into the indoor heat exchanger 10 via the flow passage 3b, the inlet port 28i of the four-way valve 28, the third port 28t of the four-way valve 28, the flow passage 3c, the on-off valve 291 and the flow passage 3e. The heat of the cooling medium is exchanged with the air remaining within the inside of the room at the indoor heat exchanger 10, so that the cooling medium is condensed (i.e. devolatilized). Hence, the indoor heat exchanger 10 serves as a condenser for condensing the cooling medium during the heating operation. A condensing heat generated at the indoor heat exchanger 10 is released to the inside of the room, so that the inside of the room is heated.

The cooling medium, which passes the indoor heat exchanger 10 and whose devolatilization progresses, is turned to be in the liquid phase state or the gas-liquid two-phase state and reaches the expansion valve 11, where the cooling medium is expanded so as to have the low pressure. Furthermore, the cooling medium, whose pressure is lowered, flows through the flow passage 3f, the on-off valve 292, the flow passage 3g and the flow passage 3h in the direction K1 so as to reach the regulating valve 25. Then, the cooling medium flows through the regulating valve 25 to reach each of the outdoor heat exchangers 23 from the port 23p thereof. The cooling medium is evaporated at each of the outdoor heat exchangers 23 and exchanges the heat of the cooling medium with the ambient air. Therefore, each of the outdoor heat exchangers 23 serves as an evaporator during the heating operation. While the heating operation is carried out at the indoor unit 1, the regulating valve 25 serves as an expansion valve and expands the cooling medium. The regulating valve 25 is configured so that the opening degree thereof is adjustable. Therefore, while the heating operation of the indoor unit 1 is carried out, the flow (i.e. the volume of the flow) of the cooling medium returning to the outdoor heat exchangers 23 of the outdoor unit 2 from the indoor unit 1 may be adjustable in response to the opening degree of the regulating valve 25. Furthermore, the cooling medium, which is evaporated by each of the outdoor heat exchangers 23, returns to the accumulator 21 from the return port 21r via the flow passage 3k, the first port 28f of the four-way valve 28, the second port 28s of the four-way valve 28 and the flow passage 3m. The cooling medium, which returns to the accumulator 21, is stored within the accumulator 21 in the state where the cooling medium is separated into the liquid cooling medium and the gaseous cooling medium. Accordingly, the heating operation is carried out in the above-described manner.

<Engine cooling system>

As illustrated in Fig. 1, an engine cooling system 80 for cooling the engine 20, which tends to have a high temperature while being operated, is provided at the air conditioning apparatus. The engine cooling system 80 includes an engine cooling portion 82 and a circulation passage 83. The engine cooling portion 82 includes the cooling chamber 81, which is provided at the engine 20 and through which the engine cooling water flows in order to prevent overheating of the engine 20. The circulation passage 83 is configured with an outward passage 83a, which is in communication with the cooling chamber 81, and a return passage 83b. The engine cooling water may include an intermediate component such as an antifreeze solution and the like. A radiator 85 and a pump 86 (i.e. an engine cooling water pumping portion) are provided at the circulation passage 83. The radiator 85 serves as a heat radiator for releasing the heat of the engine cooling water in order to cool down the engine cooling water. The pump 86 pumps the engine cooling water through the circulation passage 83. When the pump 86 is actuated, the engine cooling water remaining within the cooling chamber 81 provided at the engine 20 flows to the radiator 85 via the outlet port 81 p of the cooling chamber 81 and the outward passage 83a. Then, the heat of the cooling water is released at the radiator 85. The engine cooling water flows through the return passage 83b and the pump 86 to an exhaust heat exchanger 87, at which the engine cooling water cools down an engine exhaust gas having a high temperature. Then, the engine cooling water returns to the cooling chamber 81 of the engine 20 from a return port 81 i. Accordingly, the engine cooling water is circulated through the circulation passage 83 in the above-described manner.

A thermostat 88, which serves as a temperature response switching valve, is provided at the circulation passage 83. In a case that a temperature of the engine cooling water is excessively low (e.g. when the engine 20 is started), an opening degree of a first port 88a of the thermostat 88 is reduced or controlled so that the first port 88a is turned to be in a fully-closed state in order to control the engine cooling water so as not to flow into the radiator 85. Accordingly, the engine cooling water may be avoided from being excessively cooled down. Furthermore, in this case, an opening degree of a second port 88c is increased, so that the engine cooling water flows through a bypass passage 83e and is returned to the cooling chamber 81 via the pump 86, the exhaust heat exchanger 87 and the return port 81 i. On the other hand, in a case that the temperature of the engine cooling water is high (e.g. when an operation time of the engine 20 becomes long and the like), the opening degree of the first port 88a of the thermostat 88 is controlled to be a fully-opened degree or increased, so that a large quantity of the engine cooling water, which are heated by the cooling chamber 81, flows into the radiator 85, where the heat of the engine cooling water is facilitated to be released. In this case, the opening degree of the second port 88c is decreased or controlled to be in a fully-closed state, so that the engine cooling water is controlled so as not to flow through the bypass passage 83e. Accordingly, a volume of the engine cooling water flowing towards the radiator 85 increases.

Furthermore, as illustrated in Fig. 1, the outdoor fans 89 for supplying the cooling air to the radiator 85 and the outdoor heat exchangers 23, which neighbor with each other, are provided at the outdoor unit 2. Each of the outdoor fans 89 is configured so as to facilitate the cooling of the engine cooling water within the radiator 85 and the cooling of each of the outdoor heat exchangers 23. When a rotation number of each of the outdoor fans 89 per unit time increases, an air volume generated by each of the outdoor fans 89 increases and a heat emission amount at the radiator 85 increases, so that a cooling performance of the engine cooling water may be increased. Furthermore, the heat exchange at each of the outdoor heat exchangers 23 may be increased, which may result in increasing a condensate of the cooling water at each of the outdoor heat exchangers 23. Additionally, as illustrated in Fig. 1, an indoor fan 52 is provided at the indoor heat exchanger 10, so that the indoor fan 52 transmits an air towards the indoor heat exchanger 10. According to this embodiment, the outdoor fans 89, the radiator 85 and the outdoor heat exchangers 23 are arranged in this order, so that the outdoor fans 89 are provided at the outermost position.

<Control>

The volume of the air generated by each of the outdoor fans 89 has a correlation with the rotation number of each of the outdoor fans 89. Illustrated in Fig. 3 is a relationship between air volume levels of each of the outdoor fans 89 and the rotation number of each of the outdoor fans 89. Illustrated in Fig. 4 is a relationship between a level of the rotation number (rpm) of the compressor 22 per unit time while the cooling operation is carried out and each of plural air volume levels of each of the outdoor fans 89. Referring to Figs. 3 and 4, when the rotation number of the compressor 22 is 2000 rpm, the air volume level of each of the outdoor fans 89 is defined to be 6 (level 6) (see Fig. 4), and the rotation number of each of the outdoor fans 89 is defined to 600 rpm (see Fig. 3). In a case that the rotation number of the compressor 22 is 3000 rpm, the air volume level of each of the outdoor fans 89 is defined to be 7 (level 7), and the rotation number of each of the outdoor fans 89 is defined to be 700 rpm. Accordingly, the air volume levels are set so that a high coefficient of performance (COP) is obtained when each of the outdoor fans 89 is actuated in response to the air volume level of each of the outdoor fans 89.

According to the embodiment, as illustrated in Fig. 4, a reference air volume of each of the outdoor fans 89 corresponding to a level of the rotation number of the compressor 22 per unit time during the cooling operation is set to have plural levels (i.e. the air volume levels of level 5, level 6, level 7, level 8, level 9 and level 10). More specifically, as illustrated in Fig. 4, in a case that the rotation number of the compressor 22 is equal to or greater than 1000 rpm but lower than 2000 rpm, the air volume level of each of the outdoor fans 89 is set to be 5 (level 5). In a case that the rotation number of the compressor 22 is equal to or greater than 2000 rpm but lower than 3000 rpm, the air volume level is set to be 6 (level 6). In a case that the rotation number of the compressor 22 is equal to or greater than 3000 rpm but lower than 4000 rpm, the air volume level is set to be 7 (level 7). In a case that the rotation number of the compressor 22 is equal to or greater than 4000 rpm but lower than 5000 rpm, the air volume level is set to be 8 (level 8). In a case that the rotation number of the compressor 22 is equal to or greater than 5000 rpm but lower than 6000 rpm, the air volume level is set to be 9 (level 9). Furthermore, in a case that the rotation number of the compressor 22 is equal to or greater than 6000 rpm but lower than 7000 rpm, the air volume level is set to be 10 (level 10).

The air volume levels are set so that the high COP is obtained in the case that each of the outdoor fans 89 is actuated with reference to the air volume levels as described above while the cooling operation of the air conditioning apparatus is carried out. The data illustrated in Fig. 4 is stored within a predetermined storage area of the storage portion 105 provided at the control device 100. Additionally, levels lower than level 5 are not specified because the rotation number (rpm) of the compressor 22 when the air volume level is lower than level 5 is not included in a functional area.

According to the embodiment, a first specified value A and a second specified value B (where A > B) are specified relative to a temperature Te of the engine cooling water as threshold values for adjusting the level of the air volume. A unit of each of the first specified value A and the second specified value B may be set as a temperature unit (degrees Celsius (C)). Furthermore, a third specified value a and a fourth specified value b (where a > b) are specified relative to a difference ΔT between a condensing temperature of the cooling medium, which is supplied to each of the outdoor heat exchangers 23 serving as the condenser while the cooling operation is executed, and the ambient temperature as threshold values for adjusting the level of the air volume. A unit of each of the third specified value a and the fourth specified value b may be set as a temperature unit (degrees Celsius (°C)).

According to the embodiment, the control device 100 obtains the difference ΔT between the condensing temperature of the cooling medium, which is supplied to each of the outdoor heat exchangers 23 serving as the condenser in the refrigeration cycle during an actual cooling operation, and the ambient temperature, and the temperature Te of the engine cooling water. More specifically, the condensing temperature is obtained in a manner that the pressure of the cooling medium having the high pressure (i.e. the cooling medium that is compressed by the compressor 22 and is discharged from the outlet port 22p) is detected by the pressure sensor 71, which is provided at the upstream side relative to the outdoor heat exchangers 23 serving as the condensers while the cooling operation is carried out (i.e. at a position between the port 23i of each of the outdoor heat exchangers 23 and the outlet port 22p of the compressor 22), and the control device 100 converts the detected pressure into a saturated vapor of the cooling medium. The pressure of the cooling medium is converted into a saturated vapor state in order to correspond to condensing of the cooling medium. The temperature Te of the engine cooling water is obtained by the engine cooling water temperature sensor 73, which is provided at the outlet port 81 p of the cooling chamber 81 of the engine 20. The ambient temperature is obtained by the ambient temperature sensor 74, which is provided outside so as to be exposed to the ambient air. A detection signal outputted from each sensor such as the pressure sensor 71, the engine cooling water temperature sensor 73, the compressor rotation sensor 72, the ambient sensor 74 and the like is inputted into the control circuit 103 of the control device 100 from the input processing circuit 101 (see Fig. 2). The control unit 100 controls the opening degree of each of the expansion valve 11, the regulating valve 25, the four-way valve 28, the on-off valves 291 and 292, and an actuation of each of the pump 86 and each of the outdoor fans 89 on the basis of each of the detection signals (see Fig. 2).

According to the embodiment, each of the outdoor fans 89 is basically actuated on the basis of the level of the air volume corresponding to the rotation number of the compressor 22 per unit time among plural levels (i.e. level 5 to 10, see Fig. 4) relating to the reference air volume stored within the area of the storage portion 105 while the cooling operation of the indoor unit 1 is carried out. However, the control device 100 adjusts the air volume level of each of the outdoor fans 89 so as to increase (raise) or decrease (lower) the air volume level by one level on the basis of the difference ΔT between the condensing temperature at the condenser (i.e. the outdoor heat exchangers 23) in the refrigeration cycle while the cooling operation is executed and the ambient temperature (i.e. (the condensing temperature of the cooling water) - (the ambient temperature)) and the temperature Te of the engine cooling water.

More specifically, in a case that the temperature Te of the engine cooling water is higher than the first specified value A, or in a case that the difference ΔT between the condensing temperature and the ambient temperature (i.e. (the condensing temperature) - (the ambient temperature)) is greater than the third specified value a, the control device 100 adjusts the current air volume level relating to the reference air volume so as to be increased by one level in order to increase the reference air volume. For example, in a case that the air volume level is level 5 while the above-mentioned condition is satisfied, the control device 100 adjusts the air volume level to be increased to level 6 in order to increase the air volume. On the other hand, in a case that the temperature Te of the engine cooling water is lower than the second specified value B and the difference ΔT between the condensing temperature and the ambient temperature (i.e. (the condensing temperature) - (the ambient temperature)) is lower than the fourth specified value b, the control device 100 adjusts the current air volume level relating to the reference air volume so as to be decreased by one level in order to decrease the air volume. For example, in a case that the air volume level is level 6 while the above-mentioned condition is satisfied, the control device 100 adjusts the air volume level to be decreased by one level so that the air volume level becomes level 5 in order to decrease the air volume generated by each of the outdoor fans 89. Accordingly, because the control device 100 sets (selects) the rotation number of each of the outdoor fans 89 on the basis of the level corresponding to the rotation number of the currently actuated compressor 22 per unit time among plural levels relating to the reference air volume of each of the outdoor fans 89 stored within the storage portion 105, the air conditioning apparatus may be operated to carry out the cooling operation with high COP.

Furthermore, the control device 100 adjusts the corresponding air volume level so as to be increased or decreased by one level on the basis of a parameter of the difference ΔT between the condensing temperature and the ambient temperature in the refrigeration cycle relating to the cooling operation (i.e. (the condensing temperature) - (the ambient temperature)) and a parameter of the temperature Te of the engine cooling water. Therefore, the air volume of each of the outdoor fans 89 may be avoided from becoming unnecessarily excessive, so that the air volume of each of the outdoor fans 89 is optimized, which may result in saving energy. Accordingly, when comparing to the known air conditioning apparatus disclosed in JPH10-030853A, a time and effort for creating a complex map relating to the air volume of each of the outdoor fans 89, which requires a long development period, may be reduced or eliminated and further, the air volume of each of the outdoor fans 89 may be avoided from becoming unnecessarily excessive.

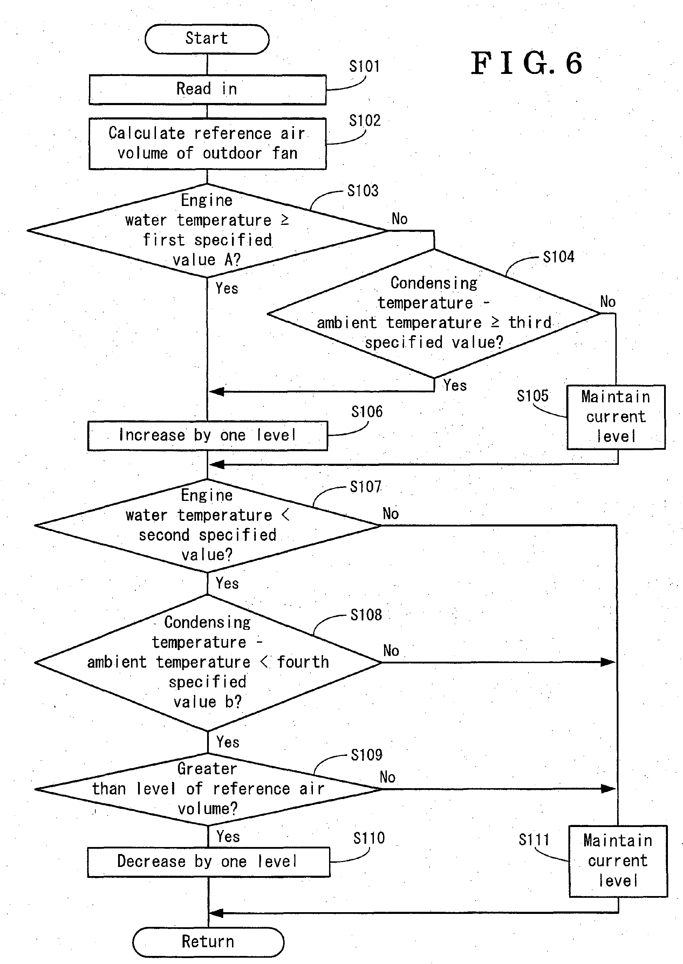

A flowchart of a control executed by the CPU 102 of the control device 100 while the cooling operation is carried out will be described below with reference to Fig. 6. Firstly, the CPU 102 reads in a rotation number N of the compressor 22 per unit time from the compressor rotation sensor 72, the temperature Te of the engine cooling water from the engine cooling water temperature sensor 73, the ambient temperature from the ambient temperature sensor 74, and the pressure of the gaseous cooling medium, which is supplied to each of the outdoor heat exchangers 23, from the pressure sensor 71 (step S101). Furthermore, the CPU 102 obtains the condensing temperature of the cooling medium on the basis of the pressure of the cooling medium supplied to each of the outdoor heat exchangers 23.

Then, the control device 100 calculates the level of the air volume of each of the outdoor fans 89 on the basis of the rotation number N of the compressor 22 (step S102). More specifically, the control device 100 obtains the level of the air volume on the basis of the table illustrated in Fig. 4. In the case that a first condition where the temperature Te of the engine cooling water is equal to or greater than the first specified value A is satisfied in step S103 (i.e. Yes in step S103), the control device 100 adjusts the level of the reference air volume so as to be increased by one level in order to increase the reference air volume (step S106).

On the other hand, in the case that the first condition where the temperature Te of the engine cooling water is equal to or greater than the first specified value A is not satisfied in step S103 (i.e. No in step S103), the control device 100 determines whether or not the difference ΔT between the condensing temperature and the ambient temperature (i.e. (the condensing temperature) - (the ambient temperature)) is equal to or greater than the third specified value a (step S104). In the case that a second condition where the difference ΔT (i.e. (the condensing temperature) - (the ambient temperature)) is equal to or greater than the third specified value a is satisfied in step S104 (i.e. Yes in step S104), the control device 100 increases the current level of the reference air volume by one level in order to increase the reference air volume (step S106).

According to the embodiment, in the case that the first condition where the temperature Te of the engine cooling water is equal to or greater than the first specified value A is satisfied (i.e. Yes in step S103), or in the case that the second condition where the difference ΔT between the condensing temperature and the ambient temperature (i.e. (the condensing temperature) - (the ambient temperature)) is equal to or greater than the third specified value a is satisfied, the control device 100 increases the level of the reference air volume by one level in order to increase the air volume. In this case, shortage in the volume of the air supplied to the radiator 85 and the outdoor heat exchangers 23 may be appropriately eliminated. In the case that the temperature Te of the engine cooling water is lower than the first specified value A (i.e. No in step S103) and the difference ΔT between the condensing temperature and the ambient temperature (i.e. (the condensing temperature) - (the ambient temperature)) is lower than the third specified value a (i.e. No in step S104), the control device 100 does not adjust the level of the air volume and maintains the current air volume level of each of the outdoor fans 89 (step S105).

Furthermore, according to the embodiment, in a case that all of a third condition where the temperature Te of the engine cooling water is lower than the second specified value B, a fourth condition where the difference ΔT between the condensing temperature and the ambient temperature (i.e. (the condensing temperature) - (the ambient temperature)) is lower than the fourth specified value b and a fifth condition where the current level of the reference air volume is equal to or greater than the air volume corresponding to the rotation number of the compressor 22 are satisfied (Yes in step S107, Yes in step S108 and Yes in step S109), the control device 100 adjusts the level of the air volume so as to be decreased by one level in order to reduce the reference air volume (step S110). Accordingly, in order to adjust the reference air volume so as to be decreased by one level, all of the third, fourth and fifth conditions need to be satisfied. Hence, because the condition of reducing the reference air volume by one level is tight, the shortage in the air volume of each of the outdoor fans 89 relative to the radiator 85 and the outdoor heat exchangers 23 may be appropriately controlled so as not to occur.

According to the embodiment, as shown in Fig. 6, in the case that the temperature Te of the engine cooling water is not lower than the second specified value B (No in step S107), the control device 100 maintains the current air volume of each of the outdoor fans 89 (step S111). Furthermore, in the case that the difference ΔT between the condensing temperature and the ambient temperature is not lower than the fourth specified value b (No in step S108), the control device 100 maintains the current air volume level of each of the outdoor fans 89 (step S111). Still further, in a case that the current level of the reference air volume is not equal to or greater than the level corresponding to the current rotation number of the compressor 22 (No in step S109), the control device 100 maintains the current air volume level of each of the outdoor fans 89 (steps S111). The control executed in step S109 indicates that the level of the air volume is not lowered than the air volume level corresponding to the rotation number defined in Fig. 4. In otherwords, the level of the air volume is lowered by one level only in the case that the level of the reference air volume is raised in step S106.

According to the embodiment, while the cooling operation is carried out, each of the outdoor fans 89 is actuated on the basis of the level corresponding to the rotation number of the compressor 22 per unit time among plural levels of the reference air volume stored within the storage area of the storage portion 105 of the control device 100. Furthermore, in this case, the control device 100 adjusts the level of the air volume so as to be increased or decreased on the basis of the parameter of the difference ΔT between the condensing temperature and the ambient temperature in the refrigeration cycle during the cooling operation and the parameter of the temperature Te of the engine cooling water. Accordingly, the time and effort for creating the complex map relating to the air volume of each of the outdoor fans 89, which requires the long development period, may be reduced or eliminated and further, the air volume of each of the outdoor fans 89 may be avoided from becoming unnecessarily excessive.

[Second embodiment]

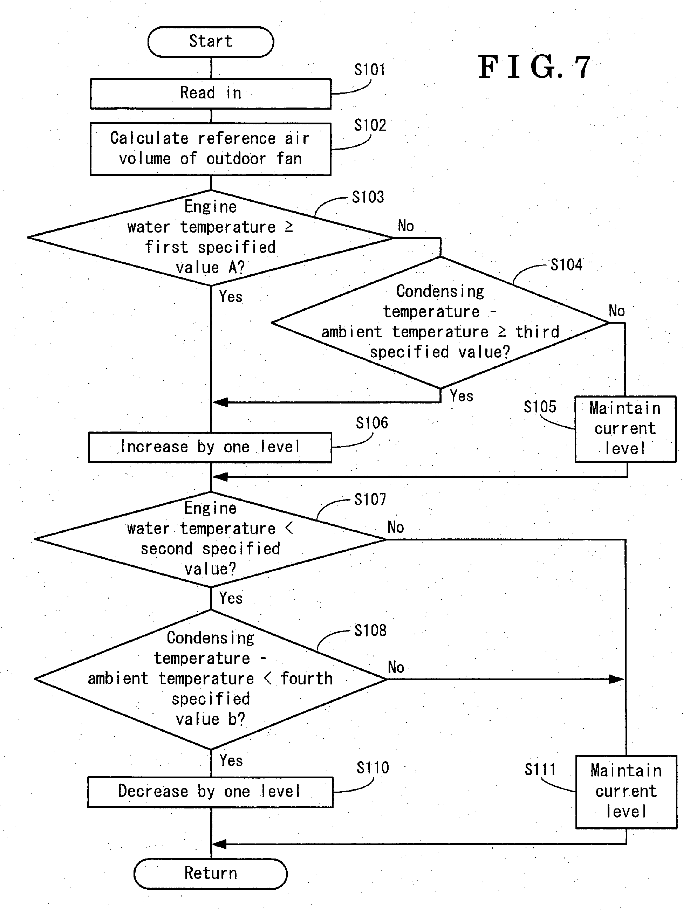

A second embodiment of the air conditioning apparatus will be described below. More specifically, a flowchart of a control executed by the CPU 102 of the control device 100 according to the second embodiment will be described with reference to Fig. 7. The control executed by the control device 100 according to the second embodiment differs from the control executed by the control device 100 according to the first embodiment in that the process of step S109 is omitted in the second embodiment. As illustrated in Fig. 7, in the case that the third condition where the temperature Te of the engine cooling water is lower than the second specified value B and the fourth condition where the difference ΔT between the condensing temperature and the ambient temperature is lower than the fourth specified value b are satisfied (i.e. Yes in step S107 and Yes in step S108), the control device 100 adjusts the level of the air volume so as to be decreased by one level in order to decrease the volume of the air (step S110).

[Other embodiments]

According to the first embodiment, as illustrated in Fig. 1, the outdoor fans 89, the radiator 85 and the outdoor heat exchangers 23 are arranged in the above-mentioned order so that the outdoor fans 89 are located at the outermost position. However, the air conditioning apparatus according to the first embodiment and the second embodiment may be modified so that the outdoor heat exchangers 23, the radiator 85 and the outdoor fans 89 are arranged in the above-mentioned order so that the outdoor heat exchangers 23 are located at the outermost position. The arrangement of this case is opposite to the first embodiment. Therefore, in this case, the outdoor fans 89 are located inwardly of the outdoor heat exchangers 23 and the radiator 85 and extract the heat of the outdoor heat exchangers 23 and the radiator 85 in order to release the heat thereof. According to this configuration, advantages and merits similar to the first embodiment may be achieved.

According to the above-described embodiments, the air conditioning apparatus includes the compressor rotation sensor 72 for detecting the rotation number of the compressor 22 per unit time. The control device 100 selects the level of the air volume, which corresponds to the rotation number of the compressor 22 per unit time detected by the compressor rotation sensor 72, among plural levels relating to the reference air volume stored within the storage portion 105 and then, the control device 100 adjusts the selected level of the air volume so as to be raised by one level or lowered by one level. However, the control device 100 of the air conditioning apparatus may be modified so as to select the level of the air volume, which corresponds to a command rotation number, among plural levels relating to the reference air volume stored within the storage portion 105 on the basis of the command rotation number transmitted to the drive circuit of the compressor 22 while the cooling operation is carried out, and then, so as to adjust the selected air volume level so as to be raised by one level or lowered by one level. The condensing temperature of the cooling medium, which is condensed by each of the outdoor heat exchangers 23, may be detected by a temperature sensor, which is provided at an inside of each of the outdoor heat exchangers 23. According to the above-described embodiments, the engine 20 is configured so as to be operated by a gaseous fuel. However, an engine driven by a liquid fuel may be adapted as the engine 20. The air conditioning apparatus is solely limited by the appended claims.

## Claims

1. An air conditioning apparatus comprising:
an engine (20) driven by combustion of fuel;
an engine cooling system (80) through which an engine cooling water for cooling down the engine (20) flows;
a radiator (85) releasing a heat of the engine cooling water;
a compressor (22) actuated by the engine (20);
an outdoor heat exchanger (23) serving as a condenser for condensing a cooling medium, which is compressed by the compressor (22), while a cooling operation is carried out;
an outdoor fan (89) supplying a cooling air to the radiator (85) and the outdoor heat exchanger (23) in order to cool down the radiator (85) and the outdoor heat exchanger (23);
an expansion portion (11) expanding the cooling medium, which is condensed by the outdoor heat exchanger (23) while the cooling operation is carried out;
an indoor heat exchanger (10) serving as an evaporator for evaporating the cooling medium, which is expanded by the expansion portion (11), while the cooling operation is carried out; **characterised by**
a control device (100) controlling an actuation of the outdoor fan (89), wherein
the control device (100) includes a storage portion (105) storing an information relating to a reference air volume corresponding to each degree of a rotation number of the compressor (22) per unit time while the cooling operation is carried out as a plurality of levels;
the control device (100) selects and sets the level of the reference air volume corresponding to the rotation number of the currently actuated compressor (22) per unit time among the plurality of the levels relating to the reference air volume stored within the storage portion (105) while the cooling operation is carried out; and
the control device (100) adjusts the selected and set level of the reference air volume so as to increase or decrease the selected and set level of the reference air volume on the basis of a parameter of a difference (ΔT) between a condensing temperature at the condenser in a refrigeration cycle while the cooling operation is carried out and an ambient temperature and a parameter of a temperature (Te) of the engine cooling water.

2. The air conditioning apparatus according to Claim 1, wherein a first specified value (A) and a second specified value (B), which is set to be lower than the first specified value (A), are specified relative to the temperature (Te) of the engine cooling water as threshold values, a third reference value (a) and a fourth reference value (b), which is set to be lower than the third specified value (a), are specified relative to the difference (ΔT) between the condensing temperature and the ambient temperature as threshold values, the control device (100) adjusts the selected and set level of the reference air volume so that an air volume of the outdoor fan (89) increases in a case that the temperature (Te) of the engine cooling water is greater than the first specified value (A) or in a case that the difference (ΔT) between the condensing temperature and the ambient temperature is greater than the third specified value (a), and the control device (100) adjusts the selected and set level of the reference air volume so that the air volume of the outdoor fan (89) decreases in a case that the temperature (Te) of the engine cooling water is lower than the second specified value (B) and in a case that the difference (ΔT) between the condensing temperature and the ambient temperature is lower than the fourth specified value (b).

## Patentansprüche

1. Klimatisierungsvorrichtung mit:
einem Motor (20), der durch die Verbrennung von Treibstoff angetrieben wird;
einem Motorkühlungssystem (80), durch welches ein Motorkühlungswasser zum Herunterkühlen des Motors (20) fließt;
einem Kühler (85), der eine Wärme von dem Motorkühlungswasser freigibt;
einem Kompressor (22), der durch den Motor (20) betätigt wird;
einem Außenwärmetauscher (23), der als ein Kondensator zum Kondensieren eines Kühlungsmediums dient, welches von dem Kompressor (22) komprimiert wird, während ein Kühlungsbetrieb ausgeführt wird;
einem Außenlüfter (89), der Kühlungsluft zu dem Kühler (85) und dem Außenwärmetauscher (23) liefert, um den Kühler (85) und den Außenwärmetauscher (23) herunterzukühlen;
einem Expansionsabschnitt (11), der das Kühlungsmedium expandiert, welches von dem Außenwärmetauscher (23) kondensiert wird, während der Kühlungsbetrieb ausgeführt wird;
einem Innenwärmetauscher (10), der als ein Verdampfer zum Verdampfen des Kühlungsmediums dient, welches von dem Expansionsabschnitt (11) expandiert wird, während der Kühlungsbetrieb ausgeführt wird;
**gekennzeichnet durch**
eine Steuerungsvorrichtung (100), die eine Betätigung des Außenlüfters (89) steuert, wobei
die Steuerungsvorrichtung (100) einen Speicherabschnitt (105) enthält, der eine Information bezüglich eines Vergleichsluftvolumens entsprechend jedem Ausmaß von einer Anzahl an Drehungen je Zeiteinheit des Kompressors (22) speichert, während der Kühlungsbetrieb ausgeführt wird, als eine Mehrzahl von Niveaus; wobei
die Steuerungsvorrichtung (100) auswählt und festlegt, das Niveau des Vergleichsluftvolumens entsprechend der Anzahl an Drehungen je Zeiteinheit von dem aktuell betätigtem Kompressor (22) unter der Mehrzahl von den Niveaus bezüglich des Vergleichsluftvolumen, das innerhalb des Speicherabschnitts (105) gespeichert ist, während der Kühlungsbetrieb ausgeführt wird; und wobei
die Steuerungsvorrichtung (100) das ausgewählte und festgelegte Niveau des Vergleichsluftvolumens einstellt, um das ausgewählte und festgelegte Niveau des Vergleichsluftvolumens zu erhöhen oder zu verringern, auf der Grundlage von einem Parameter einer Differenz (ΔT) zwischen einer Kondensationstemperatur an dem Kondensator in einem Kühlkreislauf, während der Kühlungsbetrieb ausgeführt wird, und einer Umgebungstemperatur und einem Parameter einer Temperatur (Te) des Motorkühlungswassers.

2. Klimatisierungsvorrichtung gemäß Anspruch 1, wobei ein erster festgesetzter Wert (A) und ein zweiter festgesetzter Wert (B), welcher festgelegt ist um niedriger zu sein als der erste festgesetzte Wert (A), relativ zu der Temperatur (Te) des Motorkühlungswassers als Grenzwerte festgesetzt sind, wobei ein dritter festgesetzter Wert (a) und ein vierter festgesetzter Wert (b), welcher festgelegt ist um niedriger zu sein als der dritte festgesetzte Wert (a), relativ zu der Differenz (ΔT) zwischen der Kondensationstemperatur und der Umgebungstemperatur als Grenzwerte festgelegt sind, stellt die Steuerungsvorrichtung (100) das ausgewählte und festgelegte Niveau des Vergleichsluftvolumens derart ein, dass ein Luftvolumen des Außenlüfters (89) in einem Fall ansteigt, dass die Temperatur (Te) des Motorkühlungswassers größer ist als der erste festgesetzte Wert (A) oder in einem Fall, dass die Differenz (ΔT) zwischen der Kondensationstemperatur und der Umgebungstemperatur größer ist als der dritte festgesetzte Wert (a), und die Steuerungsvorrichtung (100) stellt das ausgewählte und festgelegte Niveau des Vergleichsluftvolumens derart ein, dass das Luftvolumen des Außenlüfters (89) in einem Fall abnimmt, dass die Temperatur (Te) des Motorkühlungswassers niedriger ist als der zweite festgesetzte Wert (B) und in einem Fall, dass die Differenz (ΔT) zwischen der Kondensationstemperatur und der Umgebungstemperatur niedriger ist als der vierte festgesetzte Wert (b).

## Revendications

1. Appareil de climatisation comportant :
un moteur (20) entraîné par une combustion de carburant ;
un système de refroidissement de moteur (80) à travers lequel de l'eau de refroidissement de moteur pour le refroidissement du moteur (20) s'écoule ;
un radiateur (85) libérant de la chaleur de l'eau de refroidissement de moteur ;
un compresseur (22) actionné par le moteur (20) ;
un échangeur de chaleur extérieur (23) servant de condenseur afin de condenser un fluide de refroidissement, qui est comprimé par le compresseur (22), alors qu'une opération de refroidissement est réalisée ;
un ventilateur extérieur (89) délivrant de l'air de refroidissement au radiateur (85) et à l'échangeur de chaleur extérieur (23) afin de refroidir le radiateur (85) et l'échangeur de chaleur extérieur (23) ;
une partie de détente (11) qui détend le fluide de refroidissement, qui est condensé par l'échangeur de chaleur extérieur (23) alors que l'opération de refroidissement est réalisée ;
un échangeur de chaleur intérieur (10) servant d'évaporateur afin d'évaporer le fluide de refroidissement, qui est détendu par la partie de détente (11), alors que l'opération de refroidissement est réalisée ;
**caractérisé par**
un dispositif de commande (100) qui commande une mise en action du ventilateur extérieur (89), dans lequel
le dispositif de commande (100) comprend une partie de stockage (105) qui stocke une information se rapportant à un volume d'air de référence correspondant à chaque degré d'un nombre de rotation du compresseur (22) par unité de temps alors que l'opération de refroidissement est réalisée comme une pluralité de niveaux ;
le dispositif de commande (100) sélectionne et établit le niveau du volume d'air de référence correspondant au nombe de rotation du compresseur actuellement actionné (22) par unité de temps parmi la pluralité de niveaux se rapportant au volume d'air de référence stockés dans la partie de stockage (105) alors que l'opération de refroidissement est réalisée ; et
le dispositif de commande (100) ajuste le niveau sélectionné et établi du volume d'air de référence de façon à augmenter ou diminuer le niveau sélectionné et établi du volume d'air de référence sur la base d'un paramètre d'une différence (ΔT) entre une température de condensation au niveau du condenseur dans un cycle de réfrigération alors que l'opération de refroidissement est réalisée et une température ambiante et un paramètre d'une température (Te) de l'eau de refroidissement de moteur.

2. Appareil de climatisation selon la revendication 1, dans lequel une première valeur spécifiée (A) et une deuxième valeur spécifiée (B), qui est prévue pour être inférieure à la première valeur spécifiée (A), sont spécifiées par rapport à la température (Te) de l'eau de refroidissement de moteur comme valeurs de seuil, un troisième valeur de référence (a) et une quatrième valeur de référence (b), qui est prévue pour être inférieure à la troisième valeur spécifiée (a), sont spécifiées par rapport à la différence (ΔT) entre la température de condensation et la température ambiante comme valeurs de seuil, le dispositif de commande (100) ajuste le niveau sélectionné et établi du volume d'air de référence de telle sorte qu'un volume d'air du ventilateur extérieur (89) augmente dans un cas où la température (Te) de l'eau de refroidissement de moteur est plus grande que la première valeur spécifiée (A) ou dans un cas où la différence (ΔT) entre la température de condensation et la température ambiante est plus grande que la troisième valeur spécifiée (a), et le dispositif de commande (100) ajuste le niveau sélectionné et établi du volume d'air de référence de telle sorte que le volume d'air du ventilateur extérieur (89) diminue dans un cas où la température (Te) de l'eau de refroidissement de moteur est inférieure à la deuxième valeur spécifiée (B) et dans un cas où la différence (ΔT) entre la température de condensation et la température ambiante est inférieure à la quatrième valeur spécifiée (b).
